# FASCICULE DE BREVET EUROPEEN

(11) **EP 4 090 555 B1**
(45) Date de publication et mention de la délivrance du brevet: **28.02.2024**
(21) Numéro de dépôt: 21700756.6
(22) Date de dépôt: 15.01.2021
(51) Int. Cl.: H01L 25/075

(54) **DISPOSITIF LUMINEUX DE VÉHICULE AUTOMOBILE INCORPORANT UN ÉCRAN**
BELEUCHTUNGSVORRICHTUNG FÜR EIN KRAFTFAHRZEUG MIT EINEM BILDSCHIRM
LIGHTING DEVICE FOR MOTOR VEHICLE INCORPORATING A SCREEN

(30) Priorité: 17.01.2020 FR 2000432
(43) Date de publication de la demande: 23.11.2022
(73) Titulaire: VALEO VISION, 93012 Bobigny Cedex (FR)
(72) Inventeur: DE LAMBERTERIE, Antoine, 93012 Bobigny Cedex (FR)
(74) Mandataire: Valeo Visibility
(86) Numéro de dépôt international: PCT/EP2021/050861
(87) Numéro de publication internationale: WO 2021/144453

(56) Documents cités:
- WO-A1-2019/155243
- WO-A1-2019/158759
- CN-A- 109 802 018
- JP-A- 2019 001 398
- KR-A- 20140 079 932
- KR-A- 20190 104 664
- US-A1- 2011 156 894
- US-A1- 2017 254 518
- US-A1- 2017 341 571
- US-A1- 2018 339 643
- US-A1- 2018 372 290
- US-B1- 6 250 788

## Description

L'invention concerne le domaine de l'éclairage automobile. Plus précisément, l'invention concerne le domaine de la signalisation automobile à base d'écran.

Il est connu d'embarquer dans un dispositif lumineux de véhicule automobile, et plus particulièrement dans un dispositif de signalisation lumineuse de véhicule automobile, un écran afin d'afficher des informations à destination d'usager de la route, comme par exemple un pictogramme identifiant l'ouverture d'une portière ou la présence d'un ralentissement en avant du véhicule. Un tel dispositif avec un écran d'affichage est montré par exemple dans la demande de brevet WO 2019/158759 A1.

Afin de réaliser cet écran, il est également connu d'employer des sources lumineuses de taille réduite et dépourvues d'encapsulation, notamment dépourvues de boîtiers encapsulant ces sources, comme par exemple des microLEDs. Ces deux caractéristiques permettent de réaliser un écran compact, avec une haute résolution et une luminance suffisante pour que les informations affichées sur l'écran soient visibles par un usager de la route, de jour comme de nuit.

Toutefois, cet écran ne permet pas à lui seul de réaliser l'intégralité des fonctions photométriques réglementaires qui doivent être réalisées par un dispositif de signalisation. En effet, des réglementations encadrent les fonctions de signalisation devant être réalisées par un dispositif de signalisation avant ou arrière, comme un feu stop, un feu de position ou encore un indicateur de direction. Bien que les réglementations différent d'un pays à un autre, ces réglementations définissent entre autres des minimas d'intensités lumineuses que doivent atteindre les fonctions de signalisation. Par exemple, la réglementation européenne impose pour un feu stop un minima de 30000 Cd/m² et pour un indicateur de direction un minima de 70000 Cd/m² pour des surfaces visibles de ces fonctions d'environ 25 cm². Or, un écran du type précédemment décrit ne permet d'atteindre qu'une intensité de 5000 Cd/m² au maximum. Il est donc nécessaire de prévoir dans le dispositif de signalisation d'autres sources lumineuses permettant de réaliser ces différentes fonctions de signalisation réglementaire. La demande de brevet US2018339643 A1 montre un dispositif d'éclairage de véhicule, comme un phare avant ou un feu arrière, comprenant des microLEDs.

En outre, il est connu de monter les sources lumineuses formant l'écran sur un substrat permettant l'activation sélective de chacune des sources. Or, ce type de substrat présente une forme standard généralement rectangulaire, ce qui impose une forme spécifique à l'écran. Or, il existe un besoin de pouvoir réaliser des écrans pour des dispositifs de signalisation qui soient de forme libre, et pas forcément rectangulaire.

Enfin, la juxtaposition d'un écran à d'autres fonctions d'éclairage ou de signalisation dans un dispositif lumineux est rendue complexe par la nécessité d'observer un espace entre l'écran et les fonctions voisines. Cet espace peut ainsi créer une rupture de l'aspect esthétique global du dispositif lumineux et vient augmenter l'encombrement du dispositif lumineux.

L'invention s'inscrit dans ce contexte, et vise à répondre aux différents besoins explicités ci-dessus, en proposant un dispositif lumineux d'un véhicule automobile, qui intègre un écran dont la forme n'est pas contrainte par la technologique constituant l'écran, qui permette de réaliser en plus de l'écran au moins une fonction photométrique réglementaire sans créer de rupture de l'aspect esthétique ni augmenter l'encombrement du dispositif lumineux.

A ces fins, l'invention a pour objet un dispositif lumineux d'un véhicule automobile selon la revendication 1.

On comprend que grâce à l'invention, on dispose d'une part d'une première pluralité de sources lumineuses qui sont disposées suffisamment proches les unes des autres pour réaliser, via la première zone de l'élément optique, un écran. Par ailleurs, on dispose d'une deuxième pluralité de sources lumineuses dont on peut répartir de façon judicieuse la distribution de lumière au moyen des motifs optiques de la deuxième zone pour réaliser une fonction photométrique réglementaire, notamment en termes de minimas d'intensité lumineuse. De plus, le substrat commun peut conserver sa forme standard, la forme de l'écran étant quant à elle définie par la disposition de la première pluralité de sources lumineuses sur ce substrat et par la forme de la première zone, qui peuvent être libres. Enfin, la disposition des sources lumineuses sur un même substrat permet d'éviter une rupture de l'aspect esthétique du dispositif lumineux entre l'écran et la fonction photométrique réglementaire et d'éviter d'augmenter l'encombrement du dispositif.

Avantageusement, l'élément optique est une pièce monobloc. Si on le souhaite, la distance de l'élément optique à chacune des sources lumineuses des première et deuxième pluralités de sources lumineuses peut être inférieure à 1 millimètre.

Dans un exemple de réalisation, la première zone est une zone centrale de l'élément optique, et la deuxième zone est une zone périphérique de l'élément optique s'étendant sur tout ou partie du pourtour de la zone centrale. Si on le souhaite, la deuxième zone peut être composée d'une pluralité de sous-zones, chaque sous-zone étant disposée en vis-à-vis d'un groupe distinct de sources lumineuses de la deuxième pluralité de sources lumineuses. Le cas échéant, les sources lumineuses de la première pluralité de sources lumineuses sont agencées selon une disposition correspondant à la forme de la première zone.

On entend par motifs optiques notamment l'un ou plusieurs des éléments suivants : godrons, par exemple de profil cylindrique ; collimateurs, par exemple à lentille et/ou en réflexion totale interne ; prismes. Si on le souhaite, les motifs optiques peuvent être disposés sur une face d'entrée de l'élément optique orientée vers les sources lumineuses et/ou une face de sortie de l'élément optique orientée vers l'extérieur du dispositif. Par exemple, le profil de chaque motif optique peut être défini en fonction de la courbure et/ou de l'inclinaison de l'élément optique.

Selon l'invention, chaque source lumineuse de la première pluralité de sources lumineuses présente des dimensions inférieures à 500 micromètres et en ce que les sources lumineuses de la première pluralité de sources lumineuses sont distantes les unes des autres d'une distance inférieure à 1 millimètre. On entend par dimension d'une source lumineuse la largeur et/ou la longueur de la surface émettrice de lumière de la source lumineuse. De préférence, les dimensions de toutes les sources lumineuses de la première pluralité de sources lumineuses sont identiques. A titre d'exemple, chaque source lumineuse de la première pluralité de sources lumineuses peut être une unité émettrice de lumière à semi-conducteur de dimensions comprises entre 100 et 300 micromètres. En variante, chaque source lumineuse de la première pluralité de sources lumineuses peut être une unité émettrice de lumière à semi-conducteur de dimensions inférieures à 100 micromètres, notamment comprises entre 30 et 60 micromètres. Le cas échéant, les sources lumineuses de la première pluralité de sources lumineuses peuvent être agencées régulièrement sur le substrat commun, par exemple selon un pas inférieur ou égal à 800 micromètres, voire inférieur ou égal à 300 micromètres. De préférence, chaque source lumineuse de la première pluralité de sources lumineuses est dépourvue de toute encapsulation, par exemple incorporant une connectique ou un élément optique, et est directement montée et connectée sur le substrat commun.

Dans un mode de réalisation de l'invention, les sources lumineuses de la deuxième pluralité de sources lumineuses présentent les mêmes caractéristiques que les sources lumineuses de la première pluralité de sources lumineuses. On entend notamment par caractéristiques les dimensions et la structure interne des sources lumineuses, ainsi que le pas d'agencement et le fait que chaque source lumineuse de la deuxième pluralité de sources lumineuses soit activable sélectivement. En variante, on pourra prévoir que les sources lumineuses de la deuxième pluralité de sources lumineuses différent des sources lumineuses de la première pluralité de sources lumineuses de par au moins une caractéristique et notamment l'une des caractéristiques citées ci-dessus. Par exemple, on pourra prévoir que les sources lumineuses de la deuxième pluralité de sources lumineuses soient segmentées en différents groupes activables sélectivement ou encore que ces sources lumineuses soient uniquement activables simultanément.

Avantageusement, le rapport entre la distance séparant deux sources lumineuses de la deuxième pluralité de sources lumineuses et une dimension de chaque source lumineuse de la deuxième pluralité de sources lumineuses est supérieur ou égal à 2. Ce rapport est appelé rapport de distance. De préférence, le rapport de distance peut être supérieur ou égal à 5. En variante, le rapport de remplissage surfacique, également appelé en anglais « fill factor », à savoir la distance séparant deux sources lumineuses de la deuxième pluralité de sources lumineuse au carré divisée par la surface de chaque source lumineuse de la deuxième pluralité de sources lumineuses, peut être supérieure ou égal à 25.

Avantageusement, le substrat commun est un substrat à matrice active agencé pour contrôler sélectivement chacune des sources lumineuses de la première pluralité de sources lumineuses, chacune des sources lumineuses de la première pluralité de sources lumineuses étant montée et connectée au substrat commun au moyen d'un transistor en couches minces intégré au substrat commun. Les cas échéant, le substrat à matrice active est également agencé pour contrôler sélectivement chacune des sources lumineuses de la deuxième pluralité de sources lumineuse. Si on le souhaite, le substrat commun peut être courbé ou flexible.

Selon l'invention, chaque motif optique de la deuxième zone est agencé pour recevoir les rayons lumineux émis par l'une des sources lumineuses de la deuxième pluralité de sources lumineuses et pour concentrer ces rayons lumineux selon un axe d'émission donné. Par exemple, chaque motif optique peut présenter un profil conformé pour modifier la distribution des rayons lumineux émis par ladite source lumineuse, notamment une distribution lambertienne de ces rayons émis par ladite source lumineuse, de sorte à obtenir une luminance supérieure à celle de ladite source lumineuse. Cette caractéristique est particulièrement avantageuse lorsque le rapport de distance est supérieur ou égal à deux ou lorsque le facteur de remplissage est supérieur ou égal à quatre, dans la mesure où la luminance apparente en sortie d'un motif optique, c'est-à-dire la luminance apparente pour un observateur situé à distance du dispositif lumineux, est proportionnelle à la luminance de la source multipliée par le carré du facteur de remplissage. Si on le souhaite, chaque motif optique peut présenter un profil conformé pour étaler les rayons lumineux émis par ladite source lumineuse dans une direction horizontale, notamment lorsque ladite source lumineuse présente une surface émettrice de lumière sensiblement carrée.

Selon l'invention, la première zone est diffusante. Par exemple, la première zone comporte un grainage, notamment au niveau d'une face orientée vers l'extérieur du dispositif lumineux. Cette caractéristique permet de gommer l'aspect visible des sources lumineuses de la première pluralité de sources lumineuses au travers de la première zone de l'élément optique, en particulier lorsque le pas d'espacement des sources lumineuses est trop important. En variante, la première zone peut être lisse, par exemple lorsque le pas d'espacement est inférieur à 800 micromètres, voire inférieur à 500 micromètres.

Si on le souhaite, la première zone peut être revêtue d'un revêtement antireflet. Eventuellement, la deuxième zone peut être revêtue d'un revêtement antireflet. Cette caractéristique permet de diminuer l'influence d'une source lumineuse sur l'aspect visible d'un pixel qui est créé par une source lumineuse voisine.

Avantageusement, le rapport de distance de la deuxième pluralité de sources lumineuses est supérieur à 2 et/ou le rapport de remplissage surfacique de la deuxième pluralité de sources lumineuses est supérieur ou égal à quatre, et chaque motif optique de la deuxième zone est agencé pour recevoir les rayons lumineux émis par l'une des sources lumineuses de la deuxième pluralité de sources lumineuses et pour concentrer ces rayons lumineux selon un axe d'émission donné , tandis que la première zone est diffusante ou lisse.

Avantageusement, le dispositif lumineux comporte une unité de contrôle agencée pour contrôler sélectivement les sources lumineuses de la première pluralité de sources lumineuses de sorte que le dispositif lumineux forme un écran au niveau de la première zone de l'élément optique, l'unité de contrôle étant agencée pour contrôler les sources lumineuses de la deuxième pluralité de sources lumineuses de sorte que le dispositif lumineux émette au moins un faisceau lumineux en sortie de la deuxième zone de l'élément optique participant à la réalisation d'une fonction de signalisation réglementaire prédéterminée. En d'autres termes, les rayons lumineux que peut émettre l'une des sources lumineuses de la première pluralité de sources lumineux forme un pixel de l'écran. Et les rayons lumineux émis par les sources lumineuses de la deuxième pluralité de sources lumineuses et déviés par les motifs optiques forment ensemble au moins un faisceau lumineux réalisant tout ou partie d'une fonction de signalisation réglementaire prédéterminée. De préférence, l'unité de contrôle est agencée pour recevoir des instructions depuis un calculateur du véhicule automobile et pour contrôler les sources lumineuses du dispositif en fonction desdites instructions, par exemple de sorte à afficher un pictogramme au niveau de l'écran et/ou à réaliser un feu de position, un feu stop et/ou un indicateur de direction. Dans le cas où la deuxième zone est composée de plusieurs sous-zones chacune disposée en vis-à-vis d'un groupe distinct de sources lumineuses de la deuxième pluralité de sources lumineuses, l'unité de contrôle peut être agencée pour contrôler sélectivement chacun desdits groupes de sorte que chaque groupe émette un faisceau lumineux qui est dévié par les motifs optiques de la sous-zone associée pour réaliser une fonction de signalisation réglementaire prédéterminée distincte.

La présente invention est maintenant décrite à l'aide d'exemples uniquement illustratifs et nullement limitatifs de la portée de l'invention, et à partir des illustrations jointes, dans lesquelles :
[Fig. 1] représente une vue de face d'un dispositif lumineux selon un mode de réalisation de l'invention ;
[Fig. 2] représente différents éléments composant le dispositif lumineux de la [Fig. 1] ;
[Fig. 3] représente une vue en coupe selon un premier plan du dispositif lumineux de la [Fig. 1] ;
[Fig. 4] représente une vue en coupe selon un deuxième plan du dispositif lumineux de la [Fig. 1]

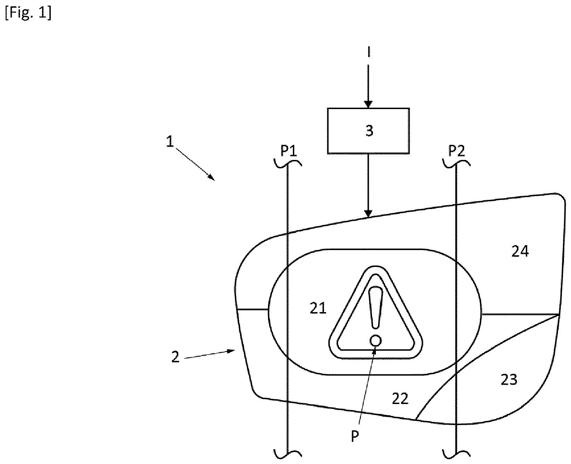

On a représenté en [Fig. 1] un dispositif lumineux 1 d'un véhicule automobile comportant un feu arrière 2.

Le feu arrière 2 est segmenté en plusieurs sections réalisant chacune une ou plusieurs fonctions données. Dans l'exemple décrit, le feu arrière 2 est segmenté en une section centrale réalisant un écran 21 ; une section périphérique inférieure gauche réalisant un indicateur de direction 22 ; une section périphérique inférieure droite réalisant un antibrouillard arrière 23 ; et une section périphérique supérieure participant alternativement à la réalisation d'un feu de position et d'un feu stop 24.

Le dispositif lumineux 1 comporte également une unité de contrôle 3 agencée pour recevoir des instructions I émises par un calculateur central du véhicule automobile et pour contrôler, en fonction desdites instructions l, l'allumage et/ou l'extinction desdites différentes fonctions citées ainsi que l'affichage d'un pictogramme P sur l'écran 21.

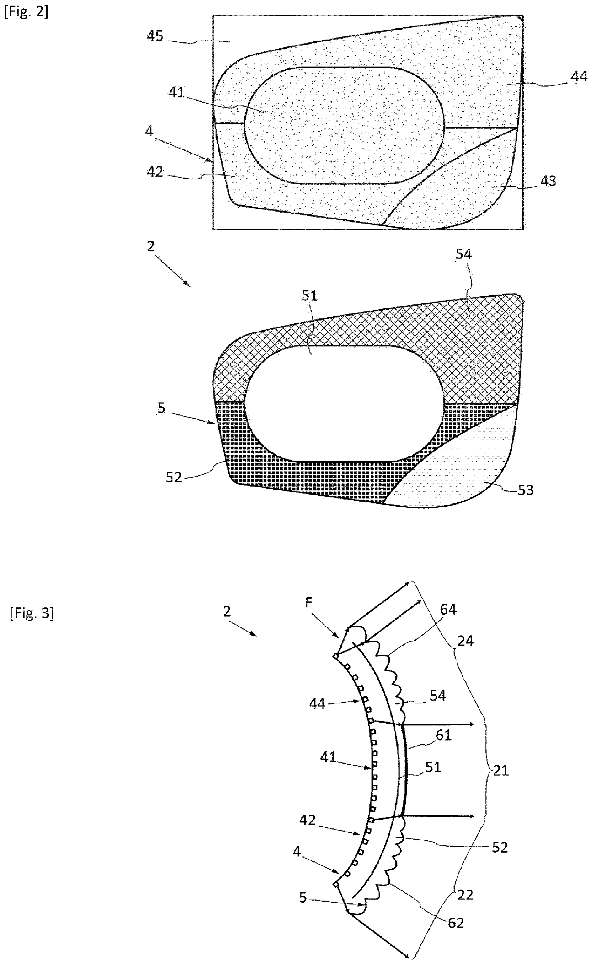

On va maintenant décrit la structure du feu arrière 2, en liaison avec la [Fig. 2].

Le feu arrière 2 comporte d'une part une première pluralité de sources lumineuses 41 destinées à réaliser l'écran 21 et une deuxième pluralité de sources lumineuses segmentées en des groupes 42, 43 et 44 chacun destiné à réaliser respectivement les fonctions indicateur de direction 22, antibrouillard arrière 23 et feu de position/feu stop 24.

Les première et deuxième pluralités de sources lumineuses sont agencées sur un substrat commun 4.

Dans l'exemple décrit, toutes les sources lumineuses de la première pluralité 41 sont des microLEDs, à savoir des unités émettrices de lumière à semi-conducteur dépourvues d'encapsulation et dont les dimensions, à savoir la longueur et la largeur, sont de 60 micromètres. Ces unités sont agencées sur le substrat commun 4 de façon matricielle en étant régulièrement espacées d'un pas de 300 micromètres. On notera que le rapport de distance des sources lumineuses de la première pluralité 41, à savoir le rapport entre le pas d'espacement de ces sources lumineuses et une dimension de ces sources lumineuses peut être compris entre 3 et 8.

Les sources lumineuses de la deuxième pluralité 42, 43, 44 sont également des microLEDs dont les dimensions et l'agencement sur le substrat commun 4 sont identiques à ceux des sources lumineuses de la première pluralité 41. On notera que ces sources peuvent différer en fonction de la section du feu arrière qu'elles sont destinées à réaliser, notamment en termes de couleur des rayons lumineux qu'elles émettent ou termes de dimensions et de pas d'espacement. En effet, les fonctions de signalisation citées ci-dessus font l'objet d'une prescription réglementaire en termes de couleur. Par exemple, la fonction d'indicateur de direction doit être réalisée par un faisceau lumineux de couleur ambre, tandis que les fonctions de feu de position et de feu stop doivent être réalisées par des faisceaux lumineux de couleur rouge. On pourra dès lors envisager d'employer :
a. des microLEDs émettant directement des rayons lumineux dont la couleur correspond à celle requise pour la section qu'elles sont destinées à réaliser,
b. des microLEDs de dimensions réduites et qui sont agencées selon un pas réduit par rapport à celles de l'écran, ces microLEDs émettant des rayons lumineux de couleurs différentes de sorte que des microLEDs voisines émettent ensemble des rayons lumineux dont la couleur correspond, par synthèse additive, à celle requise pour la section qu'elles sont destinées à réaliser ;
c. des microLEDs émettant des rayons lumineux dont la couleur est modifiée ultérieurement par un filtre.

On notera au vu de la [Fig. 2] que les agencements de la première pluralité 41 et des différents groupes 42, 43 et 44 de la deuxième pluralité correspondent aux formes des différentes sections 21, 22, 23 et 24, l'ensemble des sources lumineuses formant pour autant un seul ensemble agencé sur le substrat commun 4, les coins 45 du substrat commun étant dépourvus de toute source lumineuse.

Le substrat commun 4 est un substrat à matrice active rectangulaire et flexible. Chacune des sources lumineuses de première et deuxième pluralités est montée et connectée au substrat commun 4 au moyen d'un transistor en couches minces intégré au substrat commun (également appelé TFT, de l'anglais Thin-Film-Transistor). Ce type de substrat permet de contrôler sélectivement chacune des sources lumineuses, au moyen de l'unité de contrôle 3, étant entendu que dans l'exemple décrit, les sources lumineuses d'un même groupe 42, 43 ou 44 sont contrôlées ensemble pour commander l'allumage et/ou l'extinction de la fonction qu'elles sont destinées à réaliser tandis que les sources lumineuses de la première pluralité 41 sont contrôlées sélectivement pour former chacune un pixel de l'écran 21 permettant l'affichage du pictogramme P sur l'écran 21. En variante, on pourra prévoir de contrôler sélectivement chacune des sources lumineuses des groupes 42, 43, 44 par exemple pour réaliser des fonctions lumineuses dynamiques.

Le substrat 4 étant flexible, les coins 45 peuvent être repliés vers l'arrière du feu arrière 2 pour être masqués aux yeux d'un utilisateur situé à l'extérieur du véhicule automobile.

Le feu arrière 2 comporte en outre un élément optique 5, sous la forme d'une pièce transparente ou translucide monobloc, disposé en vis-à-vis du substrat commun 4 à une distance 500 micromètres de sorte à recevoir de la lumière émise par les sources lumineuses.

Plus spécifiquement, l'élément optique 5 est segmenté en une première zone centrale 51 et en une deuxième zone périphérique elle-même composée de sous-zones 52, 53 et 54.

La première zone centrale 51 est disposée en vis-à-vis de la première pluralité de sources lumineuses 41 et sa forme correspond sensiblement à celle de l'agencement de ces sources lumineuses et à celle de la section 21. De même, chacune des sous-zones 52, 53 et 54 est disposée respectivement en vis-à-vis d'un des groupes 42, 43 et 44 de la deuxième pluralité de sources lumineuses.

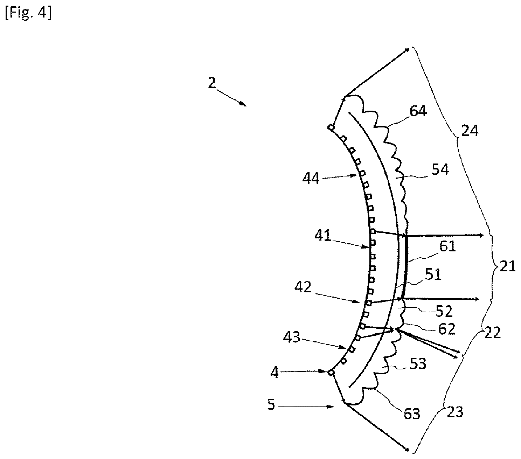

On a représenté en [Fig. 3] et [Fig. 4] des coupes du feu arrière 2 selon des plans verticaux P1 et P2 représentés en [Fig. 1], permettant de comprendre la structure et le fonctionnement de ces première et deuxième zones.

La première zone centrale 51 est pourvue d'un grainage 61 sur sa face de sortie, à savoir sa face orientée vers l'extérieur du feu arrière 2. Ce grainage permet de diffuser la lumière émise par les sources lumineuses de la première pluralité 41, de sorte à éviter que l'espacement entre ces sources lumineuses soit visible par un utilisateur situé à l'extérieur du véhicule automobile. En outre, la première zone centrale 51 est pourvue d'un revêtement antireflet permettant d'éviter que de la lumière émise par l'une des sources lumineuses de la première pluralité 41 vienne perturber l'aspect du pixel formé par une source lumineuse voisine.

Chaque sous-zone 52, 53 et 54 de l'élément optique 5 comporte des motifs optiques 62, 63 et 64 formés sur une face de sortie de cette sous-zone.

Chaque motif optique 62, 63 ou 64 d'une sous-zone 52, 53 ou 54 est agencé pour recevoir les rayons lumineux F émis par l'une des sources lumineuses du groupe 42, 43 ou 44 associé à cette sous-zone et pour concentrer ces rayons lumineux F de sorte que la luminance apparente en sortie dudit motif optique soit supérieure à la luminance de ladite source lumineuse.

Dans l'exemple décrit, chaque motif optique 62, 63 et 64 ainsi associé à l'une des sources lumineuses des groupes 42, 43 ou 44 est un godron de surface torique, c'est-à-dire présentant une courbure dans une direction et une autre courbure dans une autre direction, qui est déterminé en fonction notamment de la distance de ladite source lumineuse associé à l'élément optique 5, de la courbure de l'élément optique 5 au droit de ladite source lumineuse, et de la fonction de signalisation 22, 23 et 24 destinée à être réalisée par le groupe auquel appartient ladite source lumineuse.

On s'assure ainsi que chacun des faisceaux lumineux réalisés par les rayons lumineux F des sources lumineuses de chacun des groupes 42, 43 et 44 et déviés par les éléments optiques 62, 63 et 64 des sous-zones 52, 53 et 54 est conforme aux exigences réglementaires encadrant les fonctions 22, 23 et 24, notamment en termes de minimas d'intensité lumineuse.

Il est à noter que le feu arrière 2 peut comporter d'autres éléments que ceux représentés, et notamment un boîtier et une glace de fermeture définissant un espace dans lequel sont agencés le substrat commun 4 et l'élément optique 5.

La description qui précède explique clairement comment l'invention permet d'atteindre les objectifs qu'elle s'est fixée, à savoir, proposer un dispositif lumineux de véhicule intégrant un écran de forme libre, et qui soit en outre capable de réaliser une ou plusieurs fonctions photométriques réglementaires, en proposant de disposer les sources lumineuses nécessaires à la réalisation de ces fonctions et à l'écran sur un même support, et en prolongeant l'élément optique de l'écran pour y ajouter des motifs optiques permettant de dévier la lumière émise et ainsi de se conformer aux exigences réglementaires encadrant ces fonctions photométriques.

En tout état de cause, l'invention ne saurait se limiter aux modes de réalisation spécifiquement décrits dans ce document.

On pourra en particulier envisager d'autres profils voire d'autres types de motifs optiques que ceux décrits, et notamment des collimateurs, des microlentilles ou encore des prismes.

## Revendications

1. Dispositif lumineux (1) d'un véhicule automobile, comprenant une première pluralité (41) de sources lumineuses activables sélectivement, et une deuxième pluralité (42, 43, 44) de sources lumineuses, les première et deuxième pluralités de sources lumineuses étant agencées sur un substrat commun (4) et chaque source lumineuse de la première pluralité étant disposée à une distance des autres sources lumineuses de la première pluralité inférieure à 1 mm, **caractérisé en ce que** le dispositif lumineux comprend un élément optique (5) présentant une première zone (51) disposée en vis-à-vis de la première pluralité de sources lumineuse et une deuxième zone (52, 53, 54) disposée en vis-à-vis de la deuxième pluralité de sources lumineuses, la deuxième zone étant pourvue de motifs optiques (62, 63, 64),
**en ce que** chaque source lumineuse de la première pluralité (41) de sources lumineuses présente des dimensions inférieures à 500 micromètres et
**en ce que** chaque motif optique (62, 63, 64) de la deuxième zone (52, 53, 54) est agencé pour recevoir les rayons lumineux (F) émis par l'une des sources lumineuses de la deuxième pluralité (42, 43, 44) de sources lumineuses et pour concentrer ces rayons lumineux selon un axe d'émission donné, et
**en ce que** la première zone (51) est diffusante ou lisse.

2. Dispositif (1) selon la revendication précédente, **caractérisé en ce que** le rapport entre la distance séparant deux sources lumineuses de la deuxième pluralité (42, 43, 44) de sources lumineuses et une dimension de chaque source lumineuse de la deuxième pluralité de sources lumineuses est supérieur à 2.

3. Dispositif (1) selon l'une quelconque des revendications précédentes, **caractérisé en ce que** le substrat commun (4) est un substrat à matrice active agencé pour contrôler sélectivement chacune des sources lumineuses de la première pluralité (41) de sources lumineuses, chacune des sources lumineuses de la première pluralité de sources lumineuses étant montée et connectée au substrat commun au moyen d'un transistor en couches minces intégré au substrat commun.

4. Dispositif (1) selon l'une quelconque des revendications précédentes, **caractérisé en ce que** la première zone (51) est revêtue d'un revêtement antireflet.

5. Dispositif lumineux (1) selon l'une quelconque des revendications précédentes, **caractérisé en ce qu'**il comporte une unité de contrôle (3) agencée pour contrôler sélectivement les sources lumineuses de la première pluralité (41) de sources lumineuses de sorte que le dispositif lumineux forme un écran (21) au niveau de la première zone (51) de l'élément optique (5), l'unité de contrôle étant agencée pour contrôler les sources lumineuses de la deuxième pluralité (42, 43, 44) de sources lumineuses de sorte que le dispositif lumineux émette au moins un faisceau lumineux en sortie de la deuxième zone (52, 53, 55) de l'élément optique participant à la réalisation d'une fonction de signalisation réglementaire prédéterminée (22, 23, 24).

## Patentansprüche

1. Leuchtvorrichtung (1) für ein Kraftfahrzeug, umfassend eine erste Mehrzahl (41) von selektiv aktivierbaren Lichtquellen und eine zweite Mehrzahl (42, 43, 44) von Lichtquellen, wobei die erste und die zweite Mehrzahl von Lichtquellen auf einem gemeinsamen Substrat (4) ausgestaltet sind und jede Lichtquelle der ersten Mehrzahl in einem Abstand von den anderen Lichtquellen der ersten Mehrzahl von weniger als 1 mm angeordnet ist, **dadurch gekennzeichnet, dass** die Leuchtvorrichtung ein optisches Element (5) umfasst, das einen ersten Bereich (51) aufweist, der gegenüber der ersten Mehrzahl von Lichtquellen angeordnet ist, und einen zweiten Bereich (52, 53, 54), der gegenüber der zweiten Mehrzahl von Lichtquellen angeordnet ist, wobei der zweite Bereich mit optischen Mustern (62, 63, 64) versehen ist,
dass jede Lichtquelle der ersten Mehrzahl (41) von Lichtquellen Abmessungen von weniger als 500 Mikrometern aufweist und
dass jedes optische Muster (62, 63, 64) des zweiten Bereichs (52, 53, 54) dazu ausgestaltet ist, die Lichtstrahlen (F) zu empfangen, die von einer der Lichtquellen der zweiten Mehrzahl (42, 43, 44) von Lichtquellen emittiert werden, und diese Lichtstrahlen gemäß einer gegebenen Emissionsachse zu bündeln, und
dass der erste Bereich (51) streuend oder glatt ist.

2. Vorrichtung (1) nach dem vorhergehenden Anspruch, **dadurch gekennzeichnet, dass** das Verhältnis zwischen dem Abstand, der zwei Lichtquellen der zweiten Mehrzahl (42, 43, 44) von Lichtquellen trennt, und einer Abmessung jeder Lichtquelle der zweiten Mehrzahl von Lichtquellen größer als 2 ist.

3. Vorrichtung (1) nach einem der vorhergehenden Ansprüche, **dadurch gekennzeichnet, dass** das gemeinsame Substrat (4) ein Substrat mit aktiver Matrix ist, das dazu ausgestaltet ist, jede der Lichtquellen der ersten Mehrzahl (41) von Lichtquellen selektiv zu steuern, wobei jede der Lichtquellen der ersten Mehrzahl von Lichtquellen an das gemeinsame Substrat mittels eines in das gemeinsame Substrat integrierten Dünnschichttransistors montiert und angeschlossen ist.

4. Vorrichtung (1) nach einem der vorhergehenden Ansprüche, **dadurch gekennzeichnet, dass** der erste Bereich (51) mit einer Antireflexbeschichtung beschichtet ist.

5. Leuchtvorrichtung (1) nach einem der vorhergehenden Ansprüche, **dadurch gekennzeichnet, dass** sie eine Steuereinheit (3) beinhaltet, die dazu ausgestaltet ist, die Lichtquellen der ersten Mehrzahl (41) von Lichtquellen selektiv zu steuern, so dass die Leuchtvorrichtung einen Schirm (21) an dem ersten Bereich (51) des optischen Elements (5) bildet, wobei die Steuereinheit dazu ausgestaltet ist, die Lichtquellen der zweiten Mehrzahl (42, 43, 44) von Lichtquellen so zu steuern, dass die Leuchtvorrichtung mindestens ein Lichtbündel im Ausgang des zweiten Bereichs (52, 53, 55) des optischen Elements emittiert, das zur Ausführung einer vorbestimmten vorschriftsmäßigen Signalisierungsfunktion (22, 23, 24) beiträgt.

## Claims

1. Lighting device (1) for a motor vehicle, comprising a first plurality (41) of selectively activatable light sources, and a second plurality (42, 43, 44) of light sources, the first and second pluralities of light sources being arranged on a common substrate (4) and each light source of the first plurality being positioned at a distance from the other light sources of the first plurality of less than 1 mm, **characterized in that** the lighting device comprises an optical element (5) having a first region (51) positioned facing the first plurality of light sources and a second region (52, 53, 54) positioned facing the second plurality of light sources, the second region being provided with optical patterns (62, 63, 64),
**in that** each light source of the first plurality (41) of light sources has dimensions of less than 500 micrometres and
**in that** each optical pattern (62, 63, 64) of the second region (52, 53, 54) is arranged to receive the light rays (F) emitted by one of the light sources of the second plurality (42, 43, 44) of light sources and to concentrate these light rays along a given emission axis, and
**in that** the first region (51) is scattering or smooth.

2. Device (1) according to the preceding claim, **characterized in that** the ratio between the distance separating two light sources of the second plurality (42, 43, 44) of light sources and a dimension of each light source of the second plurality of light sources is greater than 2.

3. Device (1) according to either one of the preceding claims, **characterized in that** the common substrate (4) is an active matrix substrate arranged to selectively control each of the light sources of the first plurality (41) of light sources, each of the light sources of the first plurality of light sources being mounted on and connected to the common substrate by means of a thin-film transistor integrated into the common substrate.

4. Device (1) according to any one of the preceding claims, **characterized in that** the first region (51) is coated with an anti-reflection coating.

5. Lighting device (1) according to any one of the preceding claims, **characterized in that** it comprises a control unit (3) arranged to selectively control the light sources of the first plurality (41) of light sources such that the lighting device forms a screen (21) in the first region (51) of the optical element (5), the control unit being arranged to control the light sources of the second plurality (42, 43, 44) of light sources such that the lighting device emits at least one light beam as output from the second region (52, 53, 55) of the optical element that participates in the performance of a predetermined regulatory signalling function (22, 23, 24) .
